# EUROPEAN PATENT APPLICATION

(11) **EP 2 477 131 A1**
(43) Date of publication of application: **18.07.2012**
(21) Application number: 11275012.0
(22) Date of filing: 14.01.2011
(51) Int. Cl.: G06F 17/50

(54) **Assisting with installation of conduits**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A method and system for assisting with installation of conduits in an installation. The method includes receiving (402) installation data representing a model of an installation (100), the model defining the installation as a set of areas (102A - 102D). The method further receives (404) conduit data representing a model of a set of conduits (200) to be installed within the installation. The installation data and the conduit data are processed (408, 410) to generate (412) data identifying in which of the set of areas of the installation the conduits are located.

## Description

The present invention relates to assisting with installing conduits in an installation.

The design of large installations, such as marine vessels, for example naval ships or submarines, normally involves modelling. Typically, the ship model is divided in a zonal fashion, with a "ring" at the top level spaced between two bulk heads. This ring is divided into different "zones" that relate to different decks of the ship. At the finest level of modelling, each zone is divided into a number of compartments.

Conventionally, conduits, such as pipes or ventilation trunking, are not modelled in the compartments. In fact, it is likely that a pipe would pass through many different compartments. This presents a problem, because it is desirable to know which pipe (and, indeed, which portion of a pipe) passes through each compartment. However, this is difficult/impractical to achieve within the zonal ship model, because one would need to provide labels for each portion of the pipe corresponding to its entry and exit points into each compartment.

In some cases conduits are defined in relation to a ship on a separate modelling program, e.g. a CAD data file including 3-D coordinate information relating to pipe spools. Each pipe is defined as a line which is broken down into a number of spools. The pipe works are manufactured as a number of spools. A spool can have its end points located in one or more compartments. However, the CAD data may not include any information regarding compartments of the ship and their locations.

Embodiments of the present invention are intended to address at least some of the problems discussed above.

According to a first aspect of the present invention there is provided a method of assisting with installation of conduits in an installation, the method including:
receiving installation data representing a model of an installation, the model defining the installation as a set of areas;
receiving conduit data representing a model of a set of conduits to be installed within the installation, and
processing the installation data and the conduit data to generate data identifying in which of the set of areas the conduits are located.

The installation data may a set of 3D coordinates representing boundaries of a said area.

The conduit data may include a set of 3D coordinates representing locations of end points of a said conduit. The conduit data may include data representing a set of 3D coordinates giving locations of end points of a branch of a said conduit.

The processing step may include determining whether the 3D coordinates representing locations of end points of a said conduit/branch lie within a polygon defined by the boundaries of a said area.

The generated data may comprise data identifying at least one said area in which end points of a said conduit are located. A said conduit may be given an identifier. The generated data may further comprise 3D coordinate data for end points of the conduit.

The generated data may be used to monitor which conduits have been tested.

The generated data may be used to produce work packages by adding compartment identifiers to drawings used in installation of the conduits.

The generated data can be used to automatically direct/transport conduits and/or related components and/or control machinery that at least partially performs installation of the conduit.

The generated data can be used to identify discrepancies between the model of the installation and another representation of the installation.

According to other aspects of the present invention there are provided systems configured to execute methods substantially as described herein.

According to other aspects of the present invention there is provided a computer program element comprising: computer code means to make the computer execute methods substantially as described herein. The element may comprise a computer program product.

Whilst the invention has been described above, it extends to any inventive combination of features set out above or in the following description.

Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:
Figure 1 schematically illustrates a model of a ship;
Figure 2 shows a graphical illustration of an example pipe spool;
Figure 3 schematically illustrates a computing device configured to execute an example embodiment;
Figure 4 shows example steps performed by the embodiment;
Figure 5 is a table illustrating an example data set relating to locations of compartments in the ship model, and
Figure 6 is a table illustrating entries in an example database containing relationships between the pipes and the compartments.

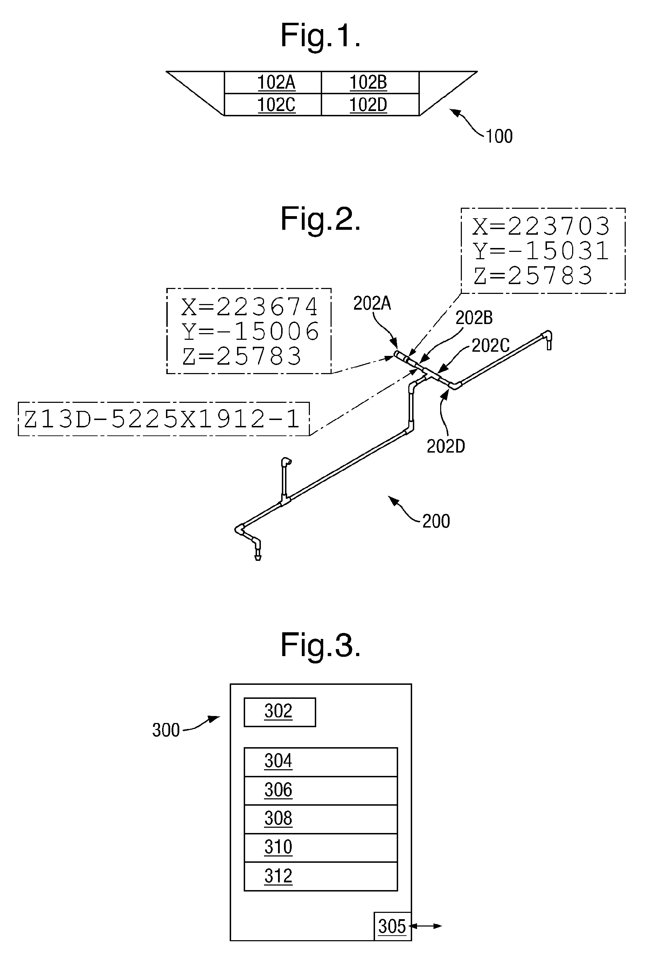

Figure 1 shows a simple example of a model of a marine vessel, in this case a ship 100. The ship model is divided into various compartments 102A ― 102D, which typically represent a particular area on a particular deck of the ship. Often, the model will be in the form of a data file produced for/by an installation management system. It will be understood that the model shown is exemplary only and different ways of dividing ships into different areas for reference purposes are possible. Further, although the example described in detail herein relates to a ship, it will be understood that the principles can be used with models of other types of installations where conduits are fitted, such as marine, land or air vehicles, buildings, etc.

In some cases, the model of the ship 100 does not include details of discrete objects, such as conduits, and these are modelled separately, e.g. using a CAD program (e.g. Tribon by Aveva). Figure 2 shows an example of a CAD model of pipe spools. One example pipe spool 200 (having a system identifier Z13D-5225X1912-1) has four branches, 202A - 202D (having system identifiers Z13D-5225X1912-1-1 to Z13D-5225X1912-1-4, respectively). The spools are defined by specifying a start point (END 1) and an end point (END 2), which each have an associated three dimensional coordinate. 3D coordinates for the two end points of one of the example branches are given as END 1: X:223674, Y: -15006, Z:25783, and END 2: X: 223703, Y:-15031, Z:25783. In the case of more complicated spool sections that have T-junctions, the T-junction can be defined by a separate start point END 1, with the end of the side junction being defined by a second end point END 2. It will be appreciated that any suitable (absolute or relative) coordinate system can be used to represent the locations of the conduit/conduit portions in the CAD model of the ship (other components of the CAD model are not shown in the Figure for clarity). Although the example described in detail herein refers to pipes, it will be understood that the principles may be used with other types of conduits, e.g. ventilation trunking, that can be fitted in various kinds of installations.

As discussed above, the model of the ship 100 does not include information regarding the locations of the pipes and the model is typically used as part of a planning/installation management system. However, the present inventors have realised that the system requires detailed pipe spool information in order to enable accurate monitoring of fitting, testing, flushing and completion of piped systems. The model 100 does not contain this level of information and attempting to manually obtain and populate the model with this type of information would be impractical, typically requiring thousands of man-hours and perfect accuracy in data inputting. Embodiments of the present method provide the facility to do this and enable configuration management of commissioning and test paths held in the system, thereby assisting with the installation of conduits.

Figure 3 is a schematic drawing of a computing device 300 configured to execute an example method of identifying in which compartments of a modelled ship a set of pipes are located. The computer includes a processor 302 and memory 304. Other components typically associated with the computing device, such as a display and user input means, will be familiar to the skilled person and need not be described here in detail. The computer can further include an interface 305 for communicating with a remote device, e.g. for controlling an installation robot.

The memory includes a first data set 306 representing a model of a ship, including information regarding the compartments, which may be derived from data produced for/by an installation management system. The memory further includes a second data set 308 representing a 3D model of the pipes as installed, which may be derived from a data file produced using a CAD application or the like. An application 310 for identifying in which compartments of the model the pipes are located uses these data sets and outputs/updates a pipe location/compartment database 312 that can be used to assist with installation of the pipes. Although the example shows the various data sets being contained in a single memory, it will be appreciated that the data (and/or processing) may be distributed over multiple computing devices/data stores in alternative embodiments.

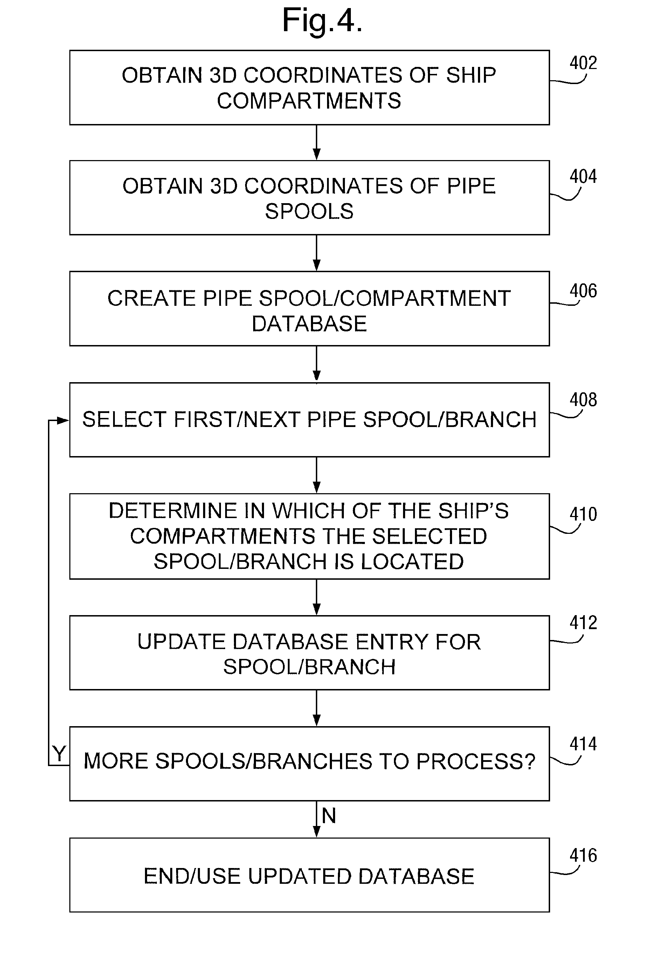

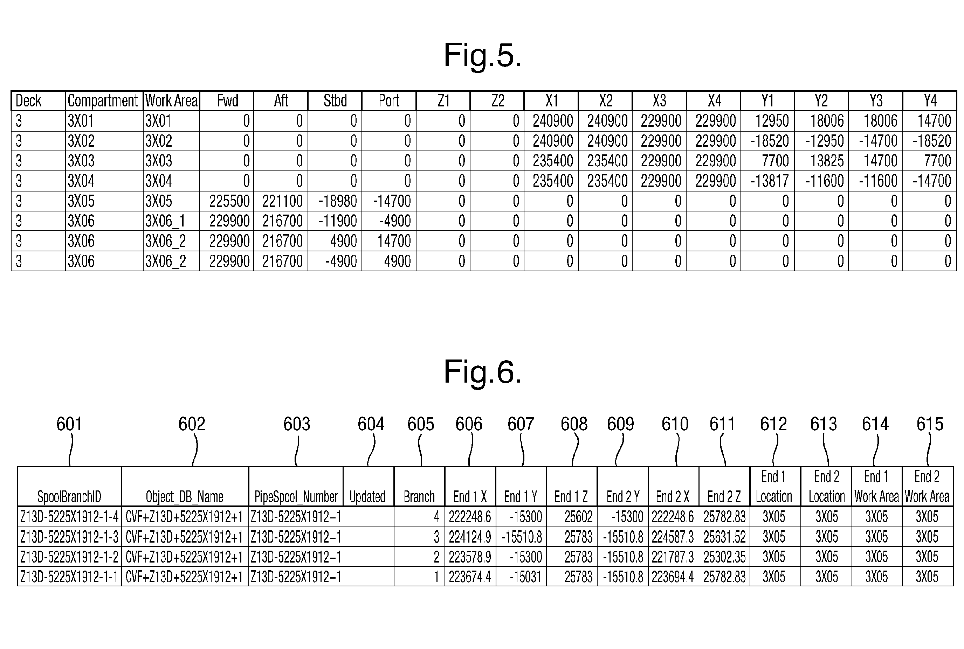

Figure 4 illustrates schematically example steps performed by the application 310. It will be appreciated that in alternative versions, some of the steps shown may be re-ordered or omitted and that the data and code can be created in any suitable format, using any suitable programming language. At step 402 the application receives data representing compartments of the ship, as modelled in the data set 306. In some cases, the application 310 may analyse installation management system data to identify compartments and their location within the ship, extract this data and produce a suitable data set 306. Figure 5 shows a table giving examples of the contents of the data set 306. The first three columns include identifiers for the compartments and the remaining columns include 3D coordinate information representing the boundaries of the compartments. Although the example relates to compartments that are cuboid in shape, it will be understood that data representing compartments having other shapes can be produced. The boundaries can be marked and measured on a CAD drawing. These bounded areas are designated as "work areas", which, in turn, form the compartment boundaries to which the pipe spool ends are then automatically allocated by the application. Work areas are simply sub-divisions of a compartment that can provide benefits in some cases. For instance, large, irregular shaped compartments can be sub divided into smaller simpler 4-sided polygons, which simplifies the computer code and thus makes it less prone to errors. Further, large compartments can be sub-divided so that objects can be assigned to specific build areas/activities within a compartment that may be carried out at different build stages.

At step 404 the application receives data representing the locations of pipes. Again, the application 310 may analyse a CAD file or the like to identify pipes and their location, extract this data and produce a suitable data set 308. The locations of the compartments and pipes will typically be represented as 3D coordinates, but may be in different formats/coordinates systems. If this is the case then the application 310 can convert the format of the compartment and/or pipe location data so that they are compatible with each other. The skilled person will be familiar with such conversion routines.

At step 406 the application may create the pipe location database 312, e.g. if the application is being used for the first time for a particular ship model.

At step 408 a first pipe/spool/branch in the received data set is selected for processing, e.g. the first pipe in the data set 308. A pipe may be in the form of a plurality of spools and may have a plurality of branches. The application 310 generates entries in the database 312 for the pipe/spool. Example database entries for one pipe spool is shown in Figure 6. The first column 601 contains an identifier for the pipe spool branch; the second column 602 is a database name for the spool, and the third column 603 is a number of the spool. These data elements are held to uniquely identify spools/branches for other applications/interfaces that may use the data. Column 604 can be used to indicate a time/date when data relating to this branch was last updated and column 605 contains an identifier number for the branch within the spool. Columns 606, 607 and 608 are 3D coordinates in the X, Y and Z planes, respectively, for the first end point of the branch, and columns 609, 610 and 611 are 3D coordinates in the X, Y and Z planes, respectively, for the second end point of the branch. Columns 612-615 contain the identifiers of compartments and work areas of the ship model in which the two end points of the branch are located. These will be different for branches that extend through more than one compartment. This compartment/work area information will be generated by the subsequent steps performed by the application 310. Although the example table shows the database being ordered according to identifiers for the spools/branches, and also includes associated 3D coordinate information, it will be understood that in alternative embodiments different ordering may be applied and different/additional information regarding the spools/branches may be stored.

At step 410 the application 310 computes in which compartment of the modelled ship the end points of the selected spool/branch are located, based on the coordinate information of the end points and the compartments boundaries. The skilled person will appreciate that several techniques could be used for performing this type of computation. For instance, where the compartments are represented by boundaries surrounding a regular or irregular 3D space the application can compute whether the coordinate of the end point lies within that 3D space. A "point in 3D polygon" algorithm such as that described in "Determining if a point lies on the interior of a polygon" by Paul Bourke available at the website local.wasp.uwa.edu.au/∼pbourke/geometry/insidepoly/ may be used, for example. In a simple embodiment, the application compares the coordinates of the selected end point with the coordinates of the compartments iteratively, according to their position in the data set 306, but it will be understood that more sophisticated search routines could be used to accelerate the search.

At step 412 the database 312 is updated in view of the results of step 410. Data representing the work area(s)/compartment(s) in which the end points lie is inserted into the columns 612 - 615. If an end point is found not to lie within the boundary of any compartment then this means that a boundary has not yet been defined for that location and the database can be updated accordingly, e.g. mark the appropriate columns as "Undefined".

At step 414 a question is asked whether all of the spools/branches in the data set have been processed. If the answer is positive then the application saves the updated database, via N, and may then terminate or use the database as discussed below (step 416); otherwise, control passes back to step 408, via Y, to process the next pipe spool/branch in the data set.

The database 312 can be used or processed for various useful purposes to assist with conduit installation. The information in the database can aid planners, build assurance, commissioning and production engineers to populate the installation management system. For instance, pipe spool information can be automatically matched to pipeline information extracted from CAD schematics for commissioning purposes. It can also allow monitoring of which pipe spools have been pressure tested for build assurance purposes. It will be appreciated that the database may be modified to flag whether or not such testing has been performed, or a separate data store or application may be updated accordingly. The information can also aid with the production of work packages by adding compartment information to the output drawings. Detail planners can use the information instead of having to work through each pipe spool in the model and allocate it to a compartment, which would be very labour intensive. The data can be used to automatically direct/transport spools to the location where they are to be installed, e.g. by passing compartment information to a robot that transports the items to that compartment, and/or control machinery that at least partially performs installation.

Further, production engineers can use the information to easily select pipe spools within design areas, enabling rapid population of inspection test records with a detail not previously possible using marked-up schematics. By comparing the pipe spool information held in management system (which reflects the state of the 3D model) to that held in other resources, it is possible to identify discrepancies between the model and the system schematics. This can then be investigated further. By being able to populate pipe spool and ventilation trunking information it is also possible to produce more detailed completion reports. The pipe spool information can be downloaded at times when most users are offline to avoid overload and changes can be identified regularly and action taken to update commissioning and test paths. Thus, use of the application can result in significant time and financial savings.

## Claims

1. A method of assisting with installation of conduits in an installation, the method including:
receiving (402) installation data representing a model of an installation (100), the model defining the installation as a set of areas (102A - 102D);
receiving (404) conduit data representing a model of a set of conduits (200) to be installed within the installation, and
processing (408, 410) the installation data and the conduit data to generate (412) data identifying in which of the set of areas the conduits are located.

2. A method according to claim 1, wherein the installation data includes sets of 3D coordinates representing boundaries of the areas (102).

3. A method according to claim 1 or 2, wherein the conduit data includes sets of 3D coordinates representing locations of end points of the conduits (200).

4. A method according to claim 2 or 3, wherein the conduit data includes 3D coordinates representing locations of end points of branches of a said conduit.

5. A method according to claim 3 or 4, wherein the processing includes determining (410) whether the 3D coordinates representing locations of end points of a said conduit/branch lie within a polygon defined by the boundaries of a said area.

6. A method according to any one of the preceding claims, wherein the generated data comprises data associating at least one said area (102) in which end points of a said conduit (200) are located.

7. A method according to any one of the preceding claims, wherein the generated data is used (416) to monitor which of the conduits have been tested.

8. A method according to any one of the preceding claims, wherein the generated data is used (416)to produce work packages by adding said compartment identifiers to drawings used for installation of the conduits.

9. A method according to any one of the preceding claims, wherein the generated data is used (416) to automatically transport conduits and/or related components.

10. A method according to any one of the preceding claims, wherein the generated data is used (416) to control machinery that at least partially performs installation of the conduits.

11. A method according to any one of the preceding claims, wherein the generated data is used (416) to identify discrepancies between the model of the installation (100) and another representation of the installation.

12. A computer program element comprising: computer code means to make the computer execute a method of assisting with installation of conduits in an installation according to any one of the preceding claims.

13. A system configured to assisting with installation of conduits in an installation, the system including:
a device (300) configured to receive (402) installation data representing a model of an installation (100), the model defining the installation as a set of areas (102A-102D);
a device (300) configured to receive (404) conduit data representing a model of a set of conduits (200) to be installed within the installation, and
a device (300) configured to process (408, 410) the installation data and the conduit data to generate (412) data identifying in which of the set of areas the conduits are located.
